# EUROPÄISCHE PATENTSCHRIFT

(11) **EP 4 026 661 B1**
(45) Veröffentlichungstag und Bekanntmachung des Hinweises auf die Patenterteilung: **05.03.2025**
(21) Anmeldenummer: 21150506.0
(22) Anmeldetag: 07.01.2021
(51) Int. Cl.: B25J 9/00, B65G 47/90, B65G 1/137, B65G 15/02, B65G 47/52

(54) **VERFAHREN UND SYSTEM ZUR ROBOTERGESTÜTZTEN ÜBERFÜHRUNG VON GÜTERN VON, INSBESONDERE ZWISCHEN, TRANSPORTTRÄGERN**
METHOD AND SYSTEM FOR ROBOT-ASSISTED TRANSFER OF GOODS FROM, AND IN PARTICULAR BETWEEN, TRANSPORT CARRIERS
PROCÉDÉ ET SYSTÈME DE TRANSFERT ASSISTÉ PAR ROBOT DES MARCHANDISES À PARTIR DE, EN PARTICULIER ENTRE LES SUPPORTS DE TRANSPORT

(43) Veröffentlichungstag der Anmeldung: 13.07.2022
(73) Patentinhaber: Swisslog Deutschland GmbH, 82178 Puchheim (DE)
(72) Erfinder: WEBER, Dr. Jörg, 44359 Dortmund (DE)
(74) Vertreter: Schlotter, Alexander Carolus Paul

(56) Entgegenhaltungen:
- EP-A1- 3 431 194
- DE-A1- 10 119 679
- DE-A1- 102006 000 721
- US-A1- 2014 244 026

## Beschreibung

Die vorliegende Erfindung betrifft Verfahren zur robotergestützten Überführung von Gütern von Transportträgern, insbesondere Überführung von Gütern zwischen Transportträgern oder von Transportträgern auf ein Abfördermittel, sowie ein System und ein Computerprogrammprodukt zur Durchführung eines erfindungsgemäßen Verfahrens.

Die US 2014/244026 A1 betrifft ein Auftragserfüllungssystem mit einem Roboterarm, wobei eine bogenförmige Struktur innerhalb der Reichweite des Roboterarms beweglich ist, ein Fördersystem Inventar zu der Struktur bringt und einen Behälter mit entnommenem Inventar von der Struktur abführt, und ein Steuersystem eine Bestellung erfüllt, indem es das Fördersystem anweist, Inventar zu der Struktur zu bringen, das Inventar auf der Struktur relativ zum Roboterarm positioniert, einen ausgewählten Inventarartikel für eine Bestellung bestimmt und dem Roboterarm befiehlt, den ausgewählten Inventarartikel von einem Entnahmeort zu einem Behälterort für die Bestellung zu bewegen, und das Fördersystem anweist, den Behälter von der Struktur zu nehmen und zeigt somit den Oberbegriff des Anspruchs 1.

Aufgabe der vorliegenden Erfindung ist es, das Überführen von Gütern zwischen Transportträgern zu verbessern.

Diese Aufgabe wird durch ein System mit den Merkmalen des Anspruchs 1 bzw. ein Verfahren mit den Merkmalen des Anspruchs 5 gelöst. Anspruch 14 stellt ein Computerprogrammprodukt zur Durchführung eines hier beschriebenen Verfahrens unter Schutz. Die Unteransprüche betreffen vorteilhafte Weiterbildungen.

Ein Aspekt der vorliegenden Erfindung betrifft die Überführung von Gütern zwischen Transportträgern. Dieser Aspekt und ein Überführung von Gütern von Transportträgern auf ein Abfördermittel werden vorliegend teilweise gemeinsam beschrieben. Entsprechend können Ausführungen, Merkmale, Vorteile etc., die mit Bezug auf den einen Aspekt erläutert sind, gleichermaßen bei einer Ausführung des anderen Aspekts realisiert sein bzw. gelten.

Nach einer Ausführung der vorliegenden Erfindung weist ein System zur Überführung von Gütern zwischen Transportträgern oder von Gütern von Transportträgern auf ein Abfördermittel des Systems einen Förderer auf, der eine Mehrzahl von wenigstens vier, vorzugsweise mehr als vier, Transportträgern gleichzeitig transportiert bzw. (weiter)fördert bzw. hierzu eingerichtet ist bzw. verwendet wird.

Der Förderer weist nach einer Ausführung der vorliegenden Erfindung einen, in einer Ausführung horizontalen und/oder zusammenhängenden bzw. durchgehenden bzw. ununterbrochenen, Karussellbahnabschnitt auf, auf dem nach einer Ausführung der vorliegenden Erfindung, insbesondere mittels des Förderers, jeweils eine Gruppe mit wenigstens vier, in einer Ausführung wenigstens fünf, Transportträgern der Transportträgermehrzahl angeordnet ist bzw. wird bzw. der hierzu eingerichtet ist bzw. verwendet wird.

Dieser Karussellbahnabschnitt umschlingt erfindungsgemäß einen Roboter, der Güter zwischen diesen Transportträgern oder in einer Ausführung von Transportträgern auf das Abfördermittel überführt bzw. hierzu eingerichtet ist bzw. verwendet wird, und zwar
- insbesondere in Horizontalrichtung gesehen bzw. bezogen auf eine vertikale Hochachse des Roboters, um bzw. über bzw. auf wenigstens120°, insbesondere wenigstens 150°, sowie
- derart, dass wenigstens 50%, insbesondere wenigstens 65%, vorzugsweise wenigstens 75%, in einer Ausführung wenigstens 85%, insbesondere wenigstens 95%, des Karussellbahnabschnitts in einem Zugriffsbereich des Roboters liegen.

In einer Ausführung umschlingt der Karussellbahnabschnitt den Roboter derart,
- dass ein Transportträger am, insbesondere in Förder- bzw. Transportrichtung des Förderers stromabwärtigen, Ende des Karussellbahnabschnitts um höchstens 240°, insbesondere höchstens 210°, sowie insbesondere wenigstens 120°, insbesondere wenigstens 150°, um eine vertikale Hochachse gegenüber seiner Pose am, insbesondere in Förder- bzw. Transportrichtung des Förderers stromaufwärtigen, Anfang des Karussellbahnabschnitts verdreht ist; und/oder
- dass der Roboter Güter von einem oder mehreren, vorzugsweise allen, der Transportträger der (jeweils) auf dem Karussellbahnabschnitt angeordneten Gruppe auf das Abfördermittel überführen kann oder Güter zwischen allen Transportträgern der (jeweils) auf dem Karussellbahnabschnitt angeordneten Gruppe überführen kann, in einer Ausführung derart, dass der Roboter alle Transportträger der (jeweils) auf dem Karussellbahnabschnitt angeordneten Gruppe komplett bzw. vollständig be- und/oder entladen kann und/oder die Ladeflächen dieser Transportträger jeweils wenigstens teilweise, in einer Ausführung zu wenigstens 75%, vorzugsweise zu wenigstens 90%, in einem Zugriffsbereich des Roboters liegen.

Hierdurch kann in einer Ausführung ein besonders effizientes und/oder kompaktes System bzw. Verfahren zur robotergestützten Überführung von Gütern zwischen Transportträgern oder zur Überführung von Gütern von Transportträgern auf ein Abfördermittel realisiert werden: indem die Gruppe auf dem Karussellbahnabschnitt innerhalb der Reichweichte des Roboters angeordnet wird bzw. ist, kann der Roboter Güter zwischen den Transportträgern bzw. von Transportträgern auf das Abfördermittel überführen und dabei in einer Ausführung unterschiedlichste Überführungsaufträge abarbeiten. Zugleich können durch die Umschlingung in einer Ausführung Komplexität und/oder Platzbedarf des Förderers reduziert werden.

Der Roboter weist in einer Ausführung einen (Roboter)Arm mit wenigstens drei, insbesondere wenigstens fünf, besonders bevorzugt wenigstens sechs und in einer Ausführung wenigstens sieben Gelenken, in einer Ausführung Drehgelenken, auf und/oder ist horizontal bzw. um eine vertikale Drehachse verschwenkbar.

Hierdurch kann in einer Ausführung eine besonders vorteilhafte Kinematik realisiert, eine Flexibilität erhöht und/oder eine Prozesszeit reduziert werden.

In einer Ausführung weist der Roboter(arm) wenigstens einen Greifer zum Anheben von Gütern von den Transportträgern auf, in einer Ausführung einen mechanischen Greifer zum form- und/oder reibschlüssigen Anheben, einen pneumatischen Greifer zum Anheben mittels Unterdruck und/oder einen magnetischen Greifer zum Anheben mittels Magnetkraft.

Hierdurch können in einer Ausführung Güter vorteilhaft, insbesondere schonend, zuverlässig, schnell und/oder flexibel überführt werden.

Der Förderer, insbesondere sein Karussellbahnabschnitt und/oder sein nachfolgend erläuterter Bypass-Bahnabschnitt, weist in einer Ausführung eine oder mehrere passive bzw. antriebslose und/oder eine oder mehrere aktiv( angetrieben)e Rollen, auf denen die Transportträger aufliegen, und/oder ein oder mehrere Bänder und/oder Bandsegmente, auf denen die Transportträger aufliegen, auf. In einer Ausführung weist der Förderer, insbesondere sein Karussellbahnabschnitt und/oder sein Bypass-Bahnabschnitt, somit wenigstens einen Rollen- und/oder wenigstens einen Bandförderer auf, kann insbesondere hieraus bestehen.

Hierfür ist eine Ausführung der vorliegenden Erfindung aufgrund der realisierbaren Prozesszeiten und vorteilhaften Handhabung von Transportträger besonders geeignet.

In einer Ausführung weist der Förderer einen bzw. den Bypass-Bahnabschnitt auf, auf dem wenigstens zeitweise wenigstens ein, in einer Ausführung wenigstens zwei, Transportträger der Transportträgermehrzahl (zusätzlich zur auf dem Karussellbahnabschnitt angeordneten Gruppe) angeordnet sind bzw. werden, bzw. der hierzu eingerichtet ist bzw. verwendet wird. In einer Ausführung liegen wenigstens 50%, insbesondere wenigstens 65%, vorzugsweise wenigstens 75%, in einer Ausführung wenigstens 85%, insbesondere wenigstens 95%, des Bypass-Bahnabschnitts im Zugriffsbereich des Roboters.

In einer Ausführung überbrückt der Bypass-Bahnabschnitt den Karussellbahnabschnitt förderungstechnisch bzw. logistisch.

In einer Ausführung weist der Förderer ein Schnittstellenpaar auf, mittels dessen der Bypass-Bahnabschnitt mit Transportträgern der Transportträgermehrzahl beschickt wird, in einer Weiterbildung
- alternativ bzw. selektiv der Bypass-Bahnabschnitt oder der Karussellbahnabschnitt mit angeförderten Transportträgern der Transportträgermehrzahl beschickt wird bzw. angeförderte Transportträger jeweils alternativ bzw. selektiv dem Bypass-Bahnabschnitt oder dem Karussellbahnabschnitt zugeleitet bzw. darauf angeordnet werden; und/oder
- der Bypass-Bahnabschnitt mit Transportträgern von dem Karussellbahnabschnitt beschickt wird,
bzw. das hierzu eingerichtet ist bzw. verwendet wird.

Zusätzlich oder alternativ werden mittels des Schnittstellenpaars Transportträger von dem Bypass-Bahnabschnitt abgeführt, in einer Weiterbildung
- Transportträger von dem Bypass-Bahnabschnitt auf den Karussellbahnabschnitt abgeführt; und/oder
- Transportträger von dem Bypass-Bahnabschnitt von dem Karussellbahnabschnitt weg bzw. fort abgeführt, in einer Ausführung derart, dass sowohl abgeförderte Transportträger von dem Bypass-Bahnabschnitts als auch abgeförderte

Transportträger von dem Karussellbahnabschnitt gemeinsam weitertransportiert werden,
bzw. ist das Schnittstellenpaar hierzu eingerichtet bzw. wird hierzu verwendet.

Hierdurch kann in einer Ausführung die Menge der Transportträger, die mittels des Roboters bedienbar sind bzw. zwischen denen mittels des Roboters Güter überführt werden können, vorteilhaft erhöht und dadurch in einer Ausführung eine Prozesszeit reduziert werden. Zusätzlich oder alternativ können hierdurch in einer Ausführung Transportträger ein- oder mehrfach in den Karussellbahnabschnitt rezirkuliert bzw. zurückgeführt und so mittels des Roboters weiter be- und/oder entladen werden. Dadurch können in einer Ausführung Prozesszeiten reduziert und/oder noch komplexere Überführungsaufträge abgearbeitet werden.

In einer Ausführung werden ein oder beide Schnittstellen des Schnittstellenpaars, insbesondere hierzu bzw. entsprechend, (um)geschaltet.

In einer Ausführung weist das Abfördermittel, insbesondere sein Ablageabschnitt, eine oder mehrere passive bzw. antriebslose und/oder eine oder mehrere aktiv( angetrieben)e Rollen, auf denen die Güter aufliegen, und/oder ein oder mehrere Bänder und/oder Bandsegmente, auf denen die Güter aufliegen, auf. In einer Ausführung weist das Abfördermittel, insbesondere sein Ablageabschnitt, somit wenigstens einen Rollen- und/oder wenigstens einen Bandförderer auf, kann insbesondere hieraus bestehen.

Hierfür ist eine Ausführung der vorliegenden Erfindung aufgrund der realisierbaren Prozesszeiten und vorteilhaften Handhabung von Gütern besonders geeignet.

In einer Ausführung sind wenigstens ein Teilabschnitt des Ablageabschnitts und wenigstens ein Teilabschnitt des Karussellbahnabschnitts auf gegenüberliegen Seiten des Roboters angeordnet.

Zusätzlich oder alternativ umgreifen Förderer und Abfördermittel, vorzugsweise Förderer und Ablageabschnitt, gemeinsam den Roboter, in einer Ausführung horizontal (gesehen) und/oder vollständig.

Zusätzlich oder alternativ übergreift der Förderer das Abfördermittel an wenigstens zwei voneinander beabstandeten Stellen. In einer Weiterbildung ist ein Mindestabstand zwischen einer Auflagefläche des Abfördermittels und einer diese übergreifenden Unterseite des Förderers (an diesen Stellen jeweils) wenigstens gleich der Summe aus einer vorgegebenen Maximalhöhe der zu überführenden Güter und einem vorgegebenen Sicherheitsabstand.

Hierdurch kann in einer Ausführung ein besonders effizientes und/oder kompaktes System bzw. Verfahren zur robotergestützten Überführung von Gütern von Transportträgern auf ein Abfördermittel realisiert werden: indem die Gruppe auf dem Karussellbahnabschnitt innerhalb der Reichweite des Roboters angeordnet wird bzw. ist, kann der Roboter Güter von einem oder mehreren, vorzugsweise allen, Transportträgern auf das Abfördermittel überführen und dabei in einer Ausführung unterschiedlichste Überführungsaufträge abarbeiten. Zugleich können durch die Umschlingung in einer Ausführung Komplexität und/oder Platzbedarf des Förderers reduziert werden.

In einer Ausführung weist das System eine Versorgungseinrichtung auf, die den Förderer, in einer Ausführung sequentiell, mit Transportträgern der Transportträgermehrzahl versorgt, in einer Ausführung in einer vorgegebenen Reihenfolge, bzw. die hierzu eingerichtet ist bzw. verwendet wird. Die Reihenfolge ist bzw. wird in einer Ausführung auf Basis eines oder mehrerer Überführungsaufträge vorgegeben, in einer Ausführung derart, dass Transportträger, zwischen denen der Roboter Güter überführt oder Transportträger, von denen der Roboter Güter auf den Ablageabschnitt des Abfördermittels überführt, zu einem Verband aus (unmittelbar bzw. ohne weitere dazwischen angeordnete Transportträger) aufeinanderfolgenden Transportträgern zusammengestellt werden bzw. sind.

Dadurch können in einer Ausführung Transportträger gezielt gemeinsam im Zugriffsbereich des Roboters angeordnet und so von diesem bearbeitet werden, wodurch in einer Ausführung die Prozesszeit (weiter) gesenkt werden kann.

Ein Überführen von Gütern zwischen Transportträgern umfasst in einer Ausführung ein Kommissionieren von Gütern von Transportträgern auf Transportträger. Entsprechend können Überführungsaufträge insbesondere Kommissionierungsaufträge umfassen, insbesondere sein. Hierfür ist eine Ausführung der vorliegenden Erfindung, insbesondere aufgrund ihrer Flexibilität und/oder Geschwindigkeit, besonders geeignet.

In einer Ausführung weisen einer oder mehrere der Transportträger der Transportträgermehrzahl (jeweils) eine Unterteilung zur Separierung von Gütern und/oder wenigstens zwei Behälter zur Separierung von Gütern auf.

Hierdurch können in einer Ausführung (noch) komplexere Überführungsaufträge abgearbeitet werden.

Das erfindungsgemäße System umfasst eine Steuerung des Systems, hard- und/oder software-, programmtechnisch, und ist zur Durchführung eines hier beschriebenen Verfahrens eingerichtet. Die Steuerung steuert hierzu den Roboter, den Förderer, die Versorgungseinrichtung und/oder die schaltbare(n) Schnittstelle(en) bzw. ist hierzu entsprechend eingerichtet.

Nach einer Ausführung der vorliegenden Erfindung wird bei einem Verfahren zur Überführung, insbesondere Kommissionierung, von Gütern zwischen Transportträgern oder von Gütern von Transportträgern auf ein Abfördermittel (mittels) eines hier beschriebenen Systems eine Gruppe mit, insbesondere aus, wenigstens vier Transportträgern der Transportträgermehrzahl, in einer Ausführung eines Verbandes aus wenigstens vier (unmittelbar bzw. ohne weitere dazwischen angeordnete Transportträger) aufeinanderfolgenden Transportträgern der Transportträgermehrzahl, die ohne Beschränkung der Allgemeinheit als erste Gruppe bezeichnet wird, insbesondere mittels des Förderers, auf dem Karussellbahnabschnitt angeordnet, so dass der Roboter Güter zwischen all diesen Transportträgern auf dem Karussellbahnabschnitt oder Güter von einem oder mehreren, vorzugsweise allen, dieser Transportträgern auf das Abfördermittel überführen kann, in einer Ausführung derart, dass der Roboter alle Transportträgern der auf dem Karussellbahnabschnitt angeordneten Gruppe komplett bzw. vollständig be- und/oder entladen kann und/oder die Ladeflächen dieser Transportträger jeweils wenigstens teilweise, in einer Ausführung zu wenigstens 75%, vorzugsweise zu wenigstens 90%, in einem Zugriffsbereich des Roboters liegen.

Dabei werden vier Transportträger der Gruppe auf dem Karussellbahnabschnitt, insbesondere aufeinanderfolgend, in der Reihenfolge erster, zweiter, dritter, vierter Transportträger oder einer beliebigen anderen Reihenfolge angeordnet. Mit anderen Worten stellt die Bezeichnung als erster, zweiter, dritter bzw. vierter Transportträger keine Beschränkung der Allgemeinheit, insbesondere keine Reihenfolge dieser Transportträger, dar, sondern dient lediglich der Bezugnahme auf verschiedene Transportträger einer Gruppe, insbesondere eines Verbands, gleichzeitig auf dem Kurvenabschnitt angeordneter Transportträger, zwischen denen der Roboter Güter überführt bzw. von denen der Roboter Güter überführt. Somit können in einer Ausführung vier Transportträger der (jeweiligen) Gruppe beispielsweise in der Reihenfolge {erster Transportträger, zweiter Transportträger, dritter Transportträger, vierter Transportträger} oder der Reihenfolge {dritter Transportträger, vierter Transportträger, erster Transportträger, zweiter Transportträger} oder einer Reihenfolge angeordnet werden. Eine hier genannte Reihenfolge kann insbesondere in Transport- bzw. Förderrichtung des Förderers bzw. Karussellbahnabschnitts gesehen von stromabwärts nach stromaufwärts definiert sein, d.h. mit dem stromabwärtigsten Transportträger beginnend.

Nach einer Ausführung der vorliegenden Erfindung weist das Verfahren den, in einer Ausführung ein- oder mehrfach wiederholten, Schritt:
(A) Abgeben von wenigstens einem von dem ersten Transportträger aufgenommenen Gut an den zweiten Transportträger mittels des Roboters;
   oder
(AA) Abgeben von wenigstens einem von dem ersten Transportträger aufgenommenen Gut auf den Ablageabschnitt des Abfördermittels mittels des Roboters
   auf.

Nach einer Ausführung der vorliegenden Erfindung weist das Verfahren zusätzlich den, in einer Ausführung ein- oder mehrfach wiederholten, Schritt auf:
(B) Abgeben von wenigstens einem von dem ersten Transportträger aufgenommenen Gut an den dritten Transportträger mittels des Roboters.

Somit wird in einer Ausführung eine Überführung von Gütern von einem Transportträger (erster Transportträger) auf wenigstens zwei andere Transportträger (zweiter Transportträger und dritter Transportträger) durchgeführt (1 → 2,3).

In einer Weiterbildung weist das Verfahren den, in einer Ausführung ein- oder mehrfach wiederholten, Schritt auf:
(E) Abgeben von wenigstens einem von dem ersten Transportträger aufgenommenen Gut an den vierten Transportträger mittels des Roboters.

Somit wird in einer Ausführung eine Überführung von Gütern von einem Transportträger (erster Transportträger) auf wenigstens drei andere Transportträger (zweiter, dritter und vierter Transportträger) durchgeführt (1 → 2,3,4).

Zusätzlich oder alternativ weist das Verfahren nach einer Ausführung der vorliegenden Erfindung den, in einer Ausführung ein- oder mehrfach wiederholten, Schritt auf:
(C) Abgeben von wenigstens einem von dem dritten Transportträger aufgenommenen Gut an den zweiten Transportträger mittels des Roboters.

Somit wird in einer Ausführung eine Überführung von Gütern von wenigstens zwei Transportträgern (erster Transportträger und dritter Transportträger) auf wenigstens einen anderen Transportträger (zweiter Transportträger) durchgeführt (1,3 → 2).

In einer Weiterbildung weist das Verfahren den, in einer Ausführung ein- oder mehrfach wiederholten, Schritt auf:
(F) Abgeben von wenigstens einem von dem vierten Transportträger aufgenommenen Gut an den zweiten Transportträger mittels des Roboters.

Somit wird in einer Ausführung eine Überführung von Gütern von wenigstens drei Transportträgern (erster, dritter und vierter Transportträger) auf wenigstens einen anderen Transportträger (zweiter Transportträger) durchgeführt (1,3,4 → 2).

Zusätzlich oder alternativ weist das Verfahren nach einer Ausführung der vorliegenden Erfindung den, in einer Ausführung ein- oder mehrfach wiederholten, Schritt auf:
(D) Abgeben von wenigstens einem von dem dritten Transportträger aufgenommenen Gut an den vierten Transportträger mittels des Roboters.

Somit wird in einer Ausführung eine Überführung von Gütern zwischen jeweils den zwei Transportträgern wenigstens zweier Paare von Transportträgern ({erster Transportträger, zweiter Transportträger} und {dritter Transportträger, vierter Transportträger}) durchgeführt (1 → 2; 3 → 4).

In einer Ausführung weist das Verfahren den, in einer Ausführung ein- oder mehrfach wiederholten, Schritt auf:
(G) Abgeben von wenigstens einem von dem ersten, zweiten, dritten oder vierten Transportträger aufgenommenen Gut an einen auf dem Bypass-Bahnabschnitt angeordneten Transportträger mittels des Roboters.

In einer Weiterbildung weist das Verfahren die, in einer Ausführung ein- oder mehrfach wiederholten, Schritte auf:
(G') Abgeben von wenigstens einem von dem ersten, zweiten, dritten oder vierten Transportträger aufgenommenen Gut an einen auf dem Bypass-Bahnabschnitt angeordneten Transportträger und von wenigstens einem von dem ersten, zweiten, dritten oder vierten Transportträger aufgenommenen Gut an einen anderen auf dem Bypass-Bahnabschnitt angeordneten Transportträger mittels des Roboters.

Zusätzlich oder alternativ weist das Verfahren in einer Ausführung den, in einer Ausführung ein- oder mehrfach wiederholten, Schritt auf:
(H) Abgeben von wenigstens einem von einem auf dem Bypass-Bahnabschnitt angeordneten Transportträger aufgenommenen Gut an einen anderen auf dem Bypass-Bahnabschnitt angeordneten Transportträger oder den ersten, zweiten, dritten oder vierten Transportträger mittels des Roboters.

In einer Weiterbildung weist das Verfahren die, in einer Ausführung ein- oder mehrfach wiederholten, Schritte auf:
(H') Abgeben von wenigstens einem von einem auf dem Bypass-Bahnabschnitt angeordneten Transportträger aufgenommenen Gut an den ersten, zweiten, dritten oder vierten Transportträger und von wenigstens von einem anderen auf dem Bypass-Bahnabschnitt angeordneten Transportträger aufgenommenen Gut an den ersten, zweiten, dritten oder vierten Transportträger mittels des Roboters.

Somit wird in einer Ausführung eine Überführung von Gütern zwischen Transportträgern der Gruppe und auf dem Bypass-Bahnabschnitt angeordneten Transportträgern und/oder eine Überführung von Gütern zwischen Transportträgern der auf dem Bypass-Bahnabschnitt angeordneten Transportträger durchgeführt.

Nach einer Ausführung der vorliegenden Erfindung weist das Verfahren zusätzlich zu Schritt (AA) den, in einer Ausführung ein- oder mehrfach wiederholten, Schritt:
(BB) Abgeben von wenigstens einem von dem zweiten Transportträger aufgenommenen Gut auf den Ablageabschnitt des Abfördermittels mittels des Roboters;
den, in einer Ausführung ein- oder mehrfach wiederholten, Schritt:
   (CC) Abgeben von wenigstens einem von dem dritten Transportträger aufgenommenen Gut auf den Ablageabschnitt des Abfördermittels mittels des Roboters; und/oder
   den, in einer Ausführung ein- oder mehrfach wiederholten, Schritt:
      (DD) Abgeben von wenigstens einem von dem vierten Transportträger aufgenommenen Gut auf den Ablageabschnitt des Abfördermittels mittels des Roboters
      auf.

Einer oder mehrere der Schritte (A), (B), (C), (D), (E), (F), (G) bzw. (G') und (H) bzw. (H') bzw. (AA), (BB), (CC) und/oder (DD) können jeweils ein- oder mehrfach wiederholt und/oder in beliebiger Reihenfolge durchgeführt, insbesondere auch mehrfach in unterschiedlicher Reihenfolge durchgeführt werden. In einer Ausführung ist während des, in einer Ausführung ein- oder mehrfach wiederholten, Schritts (A), des, in einer Ausführung ein- oder mehrfach wiederholten, Schritts (B), des, in einer Ausführung ein- oder mehrfach wiederholten, Schritts (C), des, in einer Ausführung ein- oder mehrfach wiederholten, Schritts (D), des, in einer Ausführung ein- oder mehrfach wiederholten, Schritts (E), des, in einer Ausführung ein- oder mehrfach wiederholten, Schritts (F), des, in einer Ausführung ein- oder mehrfach wiederholten, Schritts (G) bzw. (G') und/oder des, in einer Ausführung ein- oder mehrfach wiederholten, Schritts (H) bzw. (H') die erste Gruppe auf dem Karussellbahnabschnitt angeordnet. Gleiches gilt analog für eine Ausführung mit einem oder mehreren der Schritte (AA), (BB), (CC), (DD).

Hierdurch können in einer Ausführung unterschiedlichste Kommissionierungsaufträge effizient mittels des Roboters abgearbeitet werden, insbesondere wenigstens zwei einspurige Kommissionierungsaufträge (1 → 2; 3 → 4) oder ein mehrspuriger Kommissionierungsaufträge mit mehreren Ziel- und/oder Quell- Transportträgern (1 - 2,3; 1 → 2,3,4; 1,3 → 2; 1,3,4 → 2).

In einer Ausführung wird, insbesondere mittels des Förderers und/oder nach einem oder mehreren der Schritte (A), (B), (C), (D), (E), (F), (G) bzw. (G') und (H) bzw. (H') oder einem oder mehreren der Schritte (AA), (BB), (CC), (DD) bzw. nachfolgend, in einer Ausführung unmittelbar nachfolgend, eine weitere Gruppe mit, insbesondere aus, wenigstens vier Transportträgern der Transportträgermehrzahl, in einer Ausführung eines Verbandes aus wenigstens vier (unmittelbar bzw. ohne weitere dazwischen angeordnete Transportträger) aufeinanderfolgenden Transportträgern der Transportträgermehrzahl, anstelle der ersten Gruppe auf dem Karussellbahnabschnitt angeordnet bzw. die ersten Gruppe auf dem Karussellbahnabschnitt durch die weitere Gruppe ersetzt, so dass der Roboter dann Güter zwischen all diesen Transportträgern der weiteren Gruppe auf dem Karussellbahnabschnitt bzw. Güter von einem oder mehreren, vorzugsweise allen, dieser Transportträgern auf das Abfördermittel überführen kann, in einer Ausführung derart, dass der Roboter alle Transportträgern der auf dem Karussellbahnabschnitt angeordneten weiteren Gruppe komplett bzw. vollständig be- und/oder entladen kann und/oder die Ladeflächen dieser Transportträger jeweils wenigstens teilweise, in einer Ausführung zu wenigstens 75%, vorzugsweise zu wenigstens 90%, in einem Zugriffsbereich des Roboters liegen.

Dabei werden vier Transportträger der weiteren Gruppe auf dem Karussellbahnabschnitt, insbesondere aufeinanderfolgend, in der Reihenfolge erster, zweiter, dritter, vierter Transportträger oder einer beliebigen anderen Reihenfolge angeordnet.

In einer Weiterbildung dieser Ausführung weist das Verfahren den, in einer Ausführung ein- oder mehrfach wiederholten, Schritt auf:
(a) Abgeben von wenigstens einem von dem ersten Transportträger der weiteren Gruppe aufgenommenen Gut an den zweiten Transportträger der weiteren Gruppe mittels des Roboters.

In einer Ausführung dieser Weiterbildung weist das Verfahren zusätzlich den, in einer Ausführung ein- oder mehrfach wiederholten, Schritt auf:
(b) Abgeben von wenigstens einem von dem ersten Transportträger der weiteren Gruppe aufgenommenen Gut an den dritten Transportträger der weiteren Gruppe mittels des Roboters.

In einer Ausführung weist das Verfahren den, in einer Ausführung ein- oder mehrfach wiederholten, Schritt auf:
(e) Abgeben von wenigstens einem von dem ersten Transportträger der weiteren Gruppe aufgenommenen Gut an den vierten Transportträger der weiteren Gruppe mittels des Roboters.

Zusätzlich oder alternativ weist das Verfahren in einer Ausführung der Weiterbildung den, in einer Ausführung ein- oder mehrfach wiederholten, Schritt auf:
(c) Abgeben von wenigstens einem von dem dritten Transportträger der weiteren Gruppe aufgenommenen Gut an den zweiten Transportträger der weiteren Gruppe mittels des Roboters.

In einer Ausführung weist das Verfahren den, in einer Ausführung ein- oder mehrfach wiederholten, Schritt auf:
(f) Abgeben von wenigstens einem von dem vierten Transportträger der weiteren Gruppe aufgenommenen Gut an den zweiten Transportträger der weiteren Gruppe mittels des Roboters.

Zusätzlich oder alternativ weist das Verfahren in einer Ausführung der Weiterbildung den, in einer Ausführung ein- oder mehrfach wiederholten, Schritt auf:
(d) Abgeben von wenigstens einem von dem dritten Transportträger der weiteren Gruppe aufgenommenen Gut an den vierten Transportträger der weiteren Gruppe mittels des Roboters.

In einer Ausführung weist das Verfahren den, in einer Ausführung ein- oder mehrfach wiederholten, Schritt auf:
(g) Abgeben von wenigstens einem von dem ersten, zweiten, dritten oder vierten Transportträger der weiteren Gruppe aufgenommenen Gut an einen auf dem Bypass-Bahnabschnitt angeordneten Transportträger mittels des Roboters.

Zusätzlich oder alternativ weist das Verfahren in einer Ausführung den, in einer Ausführung ein- oder mehrfach wiederholten, Schritt auf:
(h) Abgeben von wenigstens einem von einem auf dem Bypass-Bahnabschnitt angeordneten Transportträger aufgenommenen Gut an einen anderen auf dem Bypass-Bahnabschnitt angeordneten Transportträger oder den ersten, zweiten, dritten oder vierten Transportträger der weiteren Gruppe mittels des Roboters.

In einer Weiterbildung der Ausführung, in der eine weitere Gruppe auf dem Karussellbahnabschnitt angeordnet wird, weist das Verfahren, insbesondere zusätzlich zu Schritt (AA), (BB), (CC) und/oder (DD), den, in einer Ausführung ein- oder mehrfach wiederholten, Schritt auf:
(aa) Abgeben von wenigstens einem von dem ersten Transportträger dieser weiteren Gruppe aufgenommenen Gut auf den Ablageabschnitt des Abfördermittels mittels des Roboters.

In einer Ausführung weist das Verfahren zusätzlich zu Schritt (aa) den, in einer Ausführung ein- oder mehrfach wiederholten, Schritt:
(bb) Abgeben von wenigstens einem von dem zweiten Transportträger dieser weiteren Gruppe aufgenommenen Gut auf den Ablageabschnitt des Abfördermittels mittels des Roboters;
den, in einer Ausführung ein- oder mehrfach wiederholten, Schritt:
   (cc) Abgeben von wenigstens einem von dem dritten Transportträger dieser weiteren Gruppe aufgenommenen Gut auf den Ablageabschnitt des Abfördermittels mittels des Roboters; und/oder
   den, in einer Ausführung ein- oder mehrfach wiederholten, Schritt:
      (dd) Abgeben von wenigstens einem von dem vierten Transportträger (3) dieser weiteren Gruppe aufgenommenen Gut auf den Ablageabschnitt des Abfördermittels mittels des Roboters
      auf.Einer oder mehrere der Schritte (a), (b), (c), (d), (e), (f), (g) und (h) bzw. (aa), (bb), (cc), (dd) können jeweils ein- oder mehrfach wiederholt und/oder in beliebiger Reihenfolge durchgeführt, insbesondere auch mehrfach in unterschiedlicher Reihenfolge durchgeführt werden. In einer Ausführung ist während des, in einer Ausführung ein- oder mehrfach wiederholten, Schritts (a), des, in einer Ausführung ein- oder mehrfach wiederholten, Schritts (b), des, in einer Ausführung ein- oder mehrfach wiederholten, Schritts (c), des, in einer Ausführung ein- oder mehrfach wiederholten, Schritts (d), des, in einer Ausführung ein- oder mehrfach wiederholten, Schritts (e), des, in einer Ausführung ein- oder mehrfach wiederholten, Schritts (f), des, in einer Ausführung ein- oder mehrfach wiederholten, Schritts (g) und/oder des, in einer Ausführung ein- oder mehrfach wiederholten, Schritts (h) die weitere Gruppe auf dem Karussellbahnabschnitt angeordnet. Gleiches gilt analog für eine Ausführung mit einem oder mehreren der Schritte (aa), (bb), (cc), (dd).

Hierdurch können in einer Ausführung unterschiedlichste Kommissionierungsaufträge nacheinander effizient mittels des Roboters abgearbeitet werden.

In einer Ausführung werden der erste, zweite, dritte und vierte Transportträger der ersten Gruppe und der erste, zweite, dritte und vierte Transportträger der weiteren Gruppe in unterschiedlichen Reihenfolgen angeordnet.

Dadurch können in einer Ausführung gleichartige Kommissionierungsaufträge, beispielsweise (1 → 2; 3 → 4), (1 → 2,3), (1 → 2,3,4), (1,3 → 2), (1,3,4 → 2) oder dergleichen in unterschiedlichen Konstellationen durchgeführt werden. Weist beispielsweise die erste Gruppe die Reihenfolge {erster Transportträger, zweiter Transportträger, dritter Transportträger, vierter Transportträger} und die weitere Gruppe die Reihenfolge {vierter Transportträger, dritter Transportträger, erster Transportträger, zweiter Transportträger} auf, kann zum Beispiel der Kommissionierungsauftrag (1 → 2,3) bei der ersten Gruppe ein Kommissioniern von dem stromabwärtigsten Transportträger auf zwei stromaufwärtigere Transportträger und bei der weiteren Gruppe von einem Transportträger auf zwei benachbarte Transportträger umfassen.

Zusätzlich oder alternativ sind in einer Ausführung wenigstens ein Transportträger der erste Gruppe und wenigstens ein Transportträger der weiteren Gruppe derselbe Transportträger bzw. identisch. Mit anderen Worten wird in einer Ausführung derselbe Transportträger in wenigstens zwei Gruppen verwendet, in einer Weiterbildung als Quellträger, von dem Güter mittels des Roboters aufgenommen werden, oder als Zielträger, an den Güter mittels des Roboters abgegeben werden.

Dadurch können in einer Ausführung Güter besonders effektiv und/oder auf bzw. von noch mehr Transportträgern überführt, insbesondere kommissioniert werden.

Zusätzlich oder alternativ weisen in einer Ausführung die erste Gruppe und die weitere Gruppe jeweils wenigstens einen eigenen, in der jeweils anderen Gruppe nicht verwendeten bzw. nicht be- und/oder entladenen, insbesondere nicht vorhandenen, Transportträger auf, insbesondere also einen eigenen ersten Transportträger, eigenen zweiten Transportträger, eigenen dritten Transportträger und/oder eigenen vierten Transportträger, der in der jeweils anderen Gruppe nicht verwendet bzw. nicht be- und/oder entladenen wird, insbesondere nicht vorhanden ist.

Dadurch können in einer Ausführung verschiedene Überführungs- bzw. Kommissionierungsaufträge sequentiell abgearbeitet werden.

In einer Ausführung ist eine Mischform vorgesehen, bei der ein oder mehrere Transportträger in beiden Gruppen identisch sind bzw. und andere Transportträger jeweils eigene, in der jeweils anderen Gruppe nicht verwendete bzw. vorhandene Transportträger sind, um beispielsweise einen oder mehrere Transportträger zunächst mit Gütern von Transportträger der einen Gruppe und anschließend mit Gütern von Transportträger der anderen Gruppe zu beladen bzw. umgekehrt von demselben Transportträger Güter auf Transportträger in beiden Gruppen zu verteilen.

Zusätzlich oder alternativ können insbesondere auch die erste und weitere Gruppe jeweils nur eigene Transportträger aufweisen bzw. kein Transportträger sowohl in der ersten als auch in der zweiten Gruppe verwendet bzw. be- und/oder entladenen werden, insbesondere vorhanden sein.

Wie bereits erläutert, wird in einer Ausführung mittels des Roboters wenigstens ein, in einer Ausführung von einem anderen auf dem Bypass-Bahnabschnitt angeordneten Transportträger aufgenommenes, Gut an einen auf dem Bypass-Bahnabschnitt angeordneten Transportträger abgegeben.

Dies erfolgt in einer Ausführung, (noch) während die erste Gruppe auf dem Karussellbahnabschnitt angeordnet ist.

Zusätzlich oder alternativ wird in einer Ausführung mittels des Roboters wenigstens ein, in einer Ausführung von einem anderen auf dem Bypass-Bahnabschnitt angeordneten Transportträger aufgenommenes, Gut an einen auf dem Bypass-Bahnabschnitt angeordneten Transportträger abgegeben, während die weitere Gruppe auf dem Karussellbahnabschnitt angeordnet ist.

Zusätzlich oder alternativ wird in einer Ausführung mittels des Roboters wenigstens ein, in einer Ausführung von einem anderen auf dem Bypass-Bahnabschnitt angeordneten Transportträger aufgenommenes, Gut an einen auf dem Bypass-Bahnabschnitt angeordneten Transportträger abgegeben, während die weitere Gruppe anstelle der ersten Gruppe auf dem Karussellbahnabschnitt angeordnet wird.

Ein Anordnen der weiteren Gruppe anstelle der ersten Gruppe auf dem Karussellbahnabschnitt umfasst in einer Ausführung ein Abfördern bzw. -transportieren der ersten Gruppe von dem Karussellbahnabschnitt und/oder ein Fördern bzw. Transportieren der weiteren Gruppe auf den Karussellbahnabschnitt, kann insbesondere hieraus bestehen. Entsprechend wird in einer Ausführung mittels des Roboters wenigstens ein, in einer Ausführung von einem anderen auf dem Bypass-Bahnabschnitt angeordneten Transportträger aufgenommenes, Gut an einen auf dem Bypass-Bahnabschnitt angeordneten Transportträger abgegeben, während die erste Gruppe von dem Karussellbahnabschnitt abgefördert bzw. -transportiert wird, und/oder wenigstens ein, in einer Ausführung von einem anderen auf dem Bypass-Bahnabschnitt angeordneten Transportträger aufgenommenes, Gut an einen auf dem Bypass-Bahnabschnitt angeordneten Transportträger abgegeben, während die weitere Gruppe auf den Karussellbahnabschnitt gefördert bzw. transportiert wird.

Zusätzlich oder alternativ werden in einer Ausführung ein oder mehrere Transportträger auf dem Bypass-Bahnabschnitt angeordnet und/oder ein oder mehrere Transportträger von dem Bypass-Bahnabschnitt abgefördert bzw. abgeführt, während mittels des Roboters wenigstens ein Gut an einen auf dem Karussellbahnabschnitt angeordneten Transportträger abgegeben, insbesondere während einer oder mehrere der Schritte (A), (B), (C), (D), (E), (F), (G) bzw. (G') und (H) bzw. (H') und/oder während einer oder mehrere der Schritte (a), (b), (c), (d), (e), (f), (g) und (h) durchgeführt, wird.

Somit werden in einer Ausführung Güter zwischen Transportträgern der ersten Gruppe überführt und/oder Güter zwischen Transportträgern der weiteren Gruppe überführt, während (jeweils) Transportträger auf dem Bypass-Bahnabschnitt angeordnet und/oder Transportträger von diesem abgefördert werden, und/oder Güter an auf dem Bypass-Bahnabschnitt angeordnete Transportträger abgegeben, in einer Ausführung zwischen auf dem Bypass-Bahnabschnitt angeordneten Transportträgern überführt, während Transportträger der ersten Gruppe von dem Karussellbahnabschnitt abgefördert und/oder Transportträger der weiteren Gruppe auf den Karussellbahnabschnitt gefördert werden.

Dadurch kann in einer Ausführung jeweils die Prozesszeit verkürzt bzw. der Roboter besser genutzt werden.

In einer Ausführung verschwenkt der Roboter (jeweils) zwischen dem Aufnahmen und Abgeben von wenigstens einem Gut horizontal.

Hierdurch kann in einer Ausführung eine Prozesszeit und/oder ein Platzbedarf reduziert werden.

In einer Ausführung wird eine Transportrichtung des Karussellbahnabschnitts und/oder eine Transportrichtung des Bypass-Bahnabschnitts, insbesondere zum Anordnen der ersten Gruppe und/oder zum Anordnen der weiteren Gruppe, ein- oder mehrfach umgekehrt.

Hierdurch können in einer Ausführung Transportträger vorteilhaft rezirkuliert werden.

In einer Ausführung sind (jeweils) eine längere Vertikalfläche bzw. Längsseite eines oder mehrerer der, vorzugswiese aller, Transportträger der ersten Gruppe und/oder der zweiten Gruppe in Transportrichtung stromaufwärts angeordnet ("Long side leading").

Dadurch können in einer Ausführung mehr Transportträger auf dem Karussellbahnabschnitt angeordnet werden.

In einer Ausführung sind (jeweils) eine kürzere Vertikalfläche bzw. Stirnseite eines oder mehrerer der, vorzugswiese aller, Transportträger der ersten Gruppe und/oder der zweiten Gruppe in Transportrichtung stromaufwärts angeordnet ("Short side leading").

Dadurch kann in einer Ausführung der Karussellbahnabschnitt schmäler bauen.

In einer Ausführung steht die erste Gruppe still, während mittels des Roboters wenigstens ein Gut von dieser Gruppe aufgenommen wird und/oder während mittels des Roboters wenigstens ein Gut an diese(r) Gruppe bzw. den Ablageabschnitt abgegeben wird. Zusätzlich oder alternativ steht in einer Ausführung die weitere Gruppe still, während mittels des Roboters wenigstens ein Gut von dieser Gruppe aufgenommen wird und/oder während mittels des Roboters wenigstens ein Gut an diese(r) Gruppe bzw. den Ablageabschnitt abgegeben wird.

Dadurch kann in einer Ausführung ein Gut präziser und/oder schonender gehandhabt werden.

In einer Ausführung wird die erste Gruppe bewegt, während mittels des Roboters wenigstens ein Gut von dieser Gruppe aufgenommen wird und/oder während mittels des Roboters wenigstens ein Gut an diese(r) Gruppe bzw. den Ablageabschnitt abgegeben wird. Zusätzlich oder alternativ wird in einer Ausführung die weitere Gruppe bewegt, während mittels des Roboters wenigstens ein Gut von dieser Gruppe aufgenommen wird und/oder während mittels des Roboters wenigstens ein Gut an diese(r) Gruppe bzw. den Ablageabschnitt abgegeben wird.

In einer Ausführung werden mittels des Roboters ein oder mehrere (der) Güter auf den Ablageabschnitt des Abfördermittels abgegeben, während das Abfördermittel (ab)fördert.

Dadurch kann in einer Ausführung eine Prozesszeit reduziert werden.

In einer Ausführung sind bzw. werden die Transportträger der ersten Gruppe und/oder der weiteren Gruppe (jeweils) auf Basis eines oder mehrerer Überführungsaufträge, in einer Weiterbildung von der Versorgungseinrichtung und/oder aufeinanderfolgend zu einem Verband, zusammengestellt.

In einer Weiterbildung werden daher
für die Schritte (A), (B) bzw. (a), (b)
   - drei Transportträger in der ersten bzw. weiteren Gruppe platziert, bei denen von einem Transportträger (erster Transportträger) Güter auf die beiden anderen Transportträger (zweiter, dritter Transportträger) überführt werden sollen;
für die Schritte (A), (B) und (E) bzw. (a), (b) und (e)
   - vier Transportträger in der ersten bzw. weiteren Gruppe platziert, bei denen von einem Transportträger (erster Transportträger) Güter auf die drei anderen Transportträger (zweiter, dritter und vierter Transportträger) überführt werden sollen;
für die Schritte (A), (C) bzw. (a), (c)
   - drei Transportträger in der ersten bzw. weiteren Gruppe platziert, bei denen von zwei der Transportträger (erster, dritter Transportträger) Güter auf den anderen Transportträger (zweiter Transportträger) überführt werden sollen;
für die Schritte (A), (C) und (F) bzw. (a), (c) und (f)
   - vier Transportträger in der ersten bzw. weiteren Gruppe platziert, bei denen von drei der Transportträger (erster, dritter und vierter Transportträger) Güter auf den anderen Transportträger (zweiter Transportträger) überführt werden sollen; und/oder
für die Schritte (A), (D) bzw. (a), (d)
   - vier Transportträger in der ersten bzw. weiteren Gruppe platziert, bei denen Güter zwischen zwei Transportträgern (erster, zweiter Transportträger) sowie Güter zwischen zwei anderen Transportträgern (dritter, vierter Transportträger) überführt werden sollen.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere das System, insbesondere den Roboter, den Förderer, die Versorgungseinrichtung und/oder die schaltbare(n) Schnittstelle(en) betreiben bzw. steuern kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. seine Steuerung.

In einer Ausführung weist das System die Mehrzahl der leeren Transportträger auf, in einer Weiterbildung die Mehrzahl der mit Gütern bestückten Transportträger. In einer Ausführung sind zwei oder mehr der Transportträger der Transportträgermehrzahl, die in den Schritt (A), (B), (C), (D), (E), (F), (G) bzw. (G') und (H) bzw. (H') bzw. (a), (b), (c), (d), (e), (f), (g) und/oder (h) bzw. (AA), (BB), (CC), (DD), (aa), (bb), (cc), (dd) mittels des Roboters von Gütern ent- bzw. mit Gütern beladen werden, baugleich.

In einer Ausführung beträgt eine Ladefläche der Transportträger der Transportträgermehrzahl jeweils wenigstens 100 cm² und/oder höchstens 25 m², in einer Ausführung höchstens 10 m². Hierfür ist die vorliegende Erfindung besonders geeignet, ohne darauf beschränkt zu sein.

Der Zugriffsbereich des Roboters ist in einer Ausführung der Bereich, innerhalb dessen der Roboter maximal Güter aufnehmen und abgeben kann.

Weitere Vorteile und Merkmale ergeben sich aus den Unteransprüchen und den Ausführungsbeispielen. Hierzu zeigt, teilweise schematisiert:
- Fig. 1:: ein System nach einer Ausführung der vorliegenden Erfindung;
- Fig. 2:: ein Verfahren nach einer Ausführung der vorliegenden Erfindung;
- Fig. 3:: ein System bzw. Verfahren nach einer weiteren Ausführung der vorliegenden Erfindung;
- Fig. 4:: ein System bzw. Verfahren nach einer weiteren Ausführung der vorliegenden Erfindung in Fig. 1, 3 entsprechender Draufsicht von oben; und
- Fig. 5: eine Seitansicht des Systems der Fig. 4.

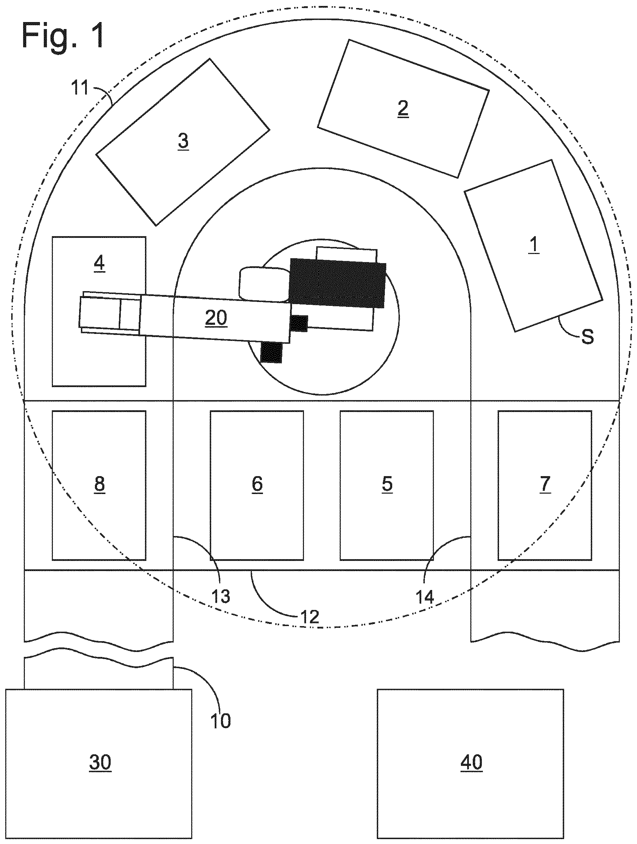

Fig. 1 zeigt ein System nach einer Ausführung der vorliegenden Erfindung.

Es weist eine Mehrzahl von Transportträgern 1-8, einen Roboter 20 zum Überführen von Gütern zwischen den Transportträgern und einen Förderer 10 zum gleichzeitigen Transportieren von Transportträgern auf, der einen Karussellbahnabschnitt 11 zur Anordnung einer Gruppe mit wenigstens vier der Transportträger aufweist, welcher den Roboter 20 in Horizontalrichtung gesehen um bzw. über bzw. auf ca. 180° sowie derart umschlingt, dass wenigstens 50% des Karussellbahnabschnitts in einem strichdoppelpunktiert angedeuteten Zugriffsbereich des Roboters liegen, der Roboter 20 Güter zwischen allen Transportträgern auf dem Karussellbahnabschnitt 11 überführen kann, und ein Transportträger am Ende des Karussellbahnabschnitts 11 um ca. 180° um eine vertikale Hochachse (senkrecht auf der Zeichenebene der Fig. 1) gegenüber seiner Pose am Anfang des Karussellbahnabschnitts verdreht ist.

Der Förderer weist einen den Karussellbahnabschnitt 11 überbrückenden Bypass-Bahnabschnitt 12 zur Anordnung von zwei der Transportträger derart, dass der Roboter 20 Güter zwischen Transportträgern der Gruppe und den auf dem Bypass-Bahnabschnitt angeordneten Transportträgern überführen kann, auf, wobei wiederum wenigstens 50% des Bypass-Bahnabschnitts im Zugriffsbereich des Roboters liegen.

Der Förderer weist zudem ein Schnittstellenpaar 13, 14 zur Beschicken des Bypass-Bahnabschnitts mit Transportträgern der Transportträgermehrzahl und zur Abfuhr von Transportträgern von dem Bypass-Bahnabschnitt auf.

Zusätzlich weist das System eine Versorgungseinrichtung 30 zur Versorgung des Förderers 10 mit Transportträgern und eine Steuerung 40 zur Durchführung eines Verfahrens nach einer Ausführung der vorliegenden Erfindung auf.

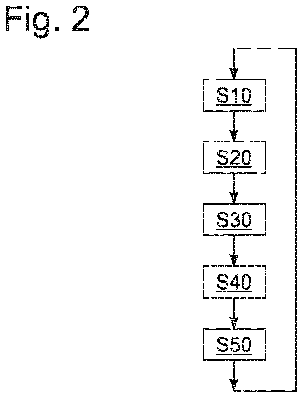

Fig. 2 zeigt ein Verfahren nach einer Ausführung der vorliegenden Erfindung.

In einem Schritt S10 werden die vier Transportträger 1-4 auf dem Karussellbahnabschnitt 11 angeordnet (vgl. Fig. 1).

Anschließend überführt der Roboter Güter von einem oder mehreren dieser Transportträger 1-4 auf die anderen dieser Transportträger 1-4, beispielsweise in einem Schritt S20 Güter von dem ersten Transportträger 1 auf den zweiten Transportträger 2, in einem Schritt S30 Güter von dem ersten Transportträger 1 auf den dritten Transportträger 3 und in einem Schritt S40 Güter von dem ersten Transportträger 1 auf den vierten Transportträger 4. Er kann einen oder mehrere der Schritte S20-S40 auch ein- oder mehrfach wiederholen, wobei die Schrittreihenfolge variieren kann.

Alternativ kann der Roboter beispielsweise auch in Schritt S20 Güter von dem ersten Transportträger 1 auf den zweiten Transportträger 2 und in Schritt S30 Güter von dem dritten Transportträger 3 auf den vierten Transportträger 4 überführen (und Schritt S40 entfallen). Auch hier können Schritt S20 und/oder S30 ein- oder mehrfach wiederholt werden, wobei die Schrittreihenfolge variieren kann.

Gleichermaßen kann der Roboter beispielsweise auch in Schritt S20 Güter von dem ersten Transportträger 1 auf den zweiten Transportträger 2, in Schritt S30 Güter von dem dritten Transportträger 3 auf den zweiten Transportträger 2 und in Schritt S40 Güter von dem vierten Transportträger 4 auf den zweiten Transportträger 2 überführen. Auch hier können einer oder mehrere der Schritte S20-S40 ein- oder mehrfach wiederholt werden, wobei die Schrittreihenfolge variieren kann.

Vorzugsweise während mittels des Roboters bereits einer oder mehrere diese Schritte S20-S30/S40 durchführt werden, werden die Transportträger 5, 6 auf dem Bypass-Bahnabschnitt 12 angeordnet, indem die Schnittstelle 13 entsprechend umgeschaltet wird.

Dann kann der Roboter zusätzlich auch Güter von einem oder mehreren der Transportträger 1-4 auf einen oder beide Transportträger 5, 6 und/oder Güter von einem oder beiden Transportträgern 5, 6 auf einen oder mehrere der Transportträger 1-4 und/oder Güter zwischen den beiden Transportträgern 5, 6 überführen (Schritt S50).

Gegebenenfalls noch während der Roboter weiter Güter zwischen den beiden Transportträgern 5, 6 überführt, können die Transportträger 1-4 aus dem Karussellbahnabschnitt 11 abgefördert werden.

Dann werden neue Transportträger auf den Karussellbahnabschnitt 11 und - gegebenenfalls nach Abfördern der Transportträgern 5, 6 - auch den Bypass-Bahnabschnitt 12 gefördert und die vorstehend beschriebenen Schritte erneut durchgeführt.

Dabei können der erste, zweite, dritte und vierte Transportträger dieser weiteren Gruppe in einer anderen Reihenfolge auf dem Karussellbahnabschnitt 11 angeordnet sein und/oder in den Schritten S20, S30 und gegebenenfalls S40 und/oder S50 andere Überführungen durchgeführt werden, beispielsweise eine Kommissionierung von einem auf drei, vier oder fünf Transportträger und anschließend eine Kommissionierung von drei, vier oder fünf auf einen Transportträger oder eine Kommissionierung zwischen den beiden Transportträgern mehrerer Paare oder dergleichen.

Gleichermaßen können ein oder mehrere der Transportträger 1-6 mittels des Roboters 20 weiter be- bzw. entladen und hierzu durch entsprechende Schaltung der Schnittstellen 13, 14 und gegebenenfalls Umkehrung der Förder- bzw. Transportrichtung rezirkuliert werden. Beispielsweise kann der Transportträger 1 über den Bypass-Bahnabschnitt 12 ein- oder mehrfach in den Karussellbahnabschnitt 11 zurückgeführt und dort mittels des Roboters 20 weiter be- bzw. entladen werden.

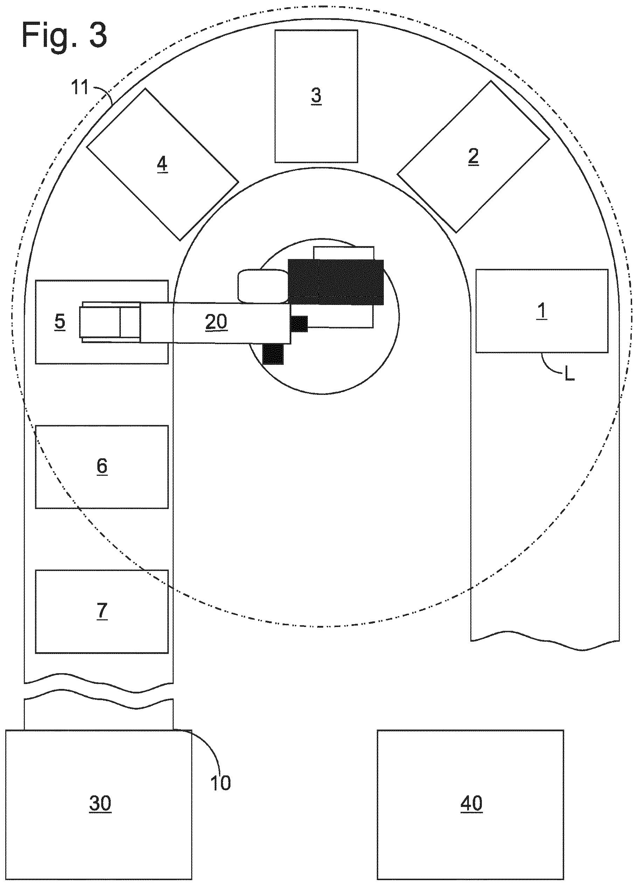

Fig. 3 zeigt ein System bzw. Verfahren nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

Bei der Ausführung der Fig. 3 werden bzw. sind längere bzw. Längsseiten L der Transportträger in Transportrichtung stromaufwärts angeordnet, bei der Ausführung der Fig. 1 hingegen kürzere bzw. Stirnseiten S.

Zudem ist bei der Ausführung der Fig. 3 der Bypass-Bahnabschnitt nicht vorhanden.

Bei der Ausführung der Fig. 3 werden bzw. sind jeweils fünf Transportträger 1-5 im Karussellbahnabschnitt 11 angeordnet.

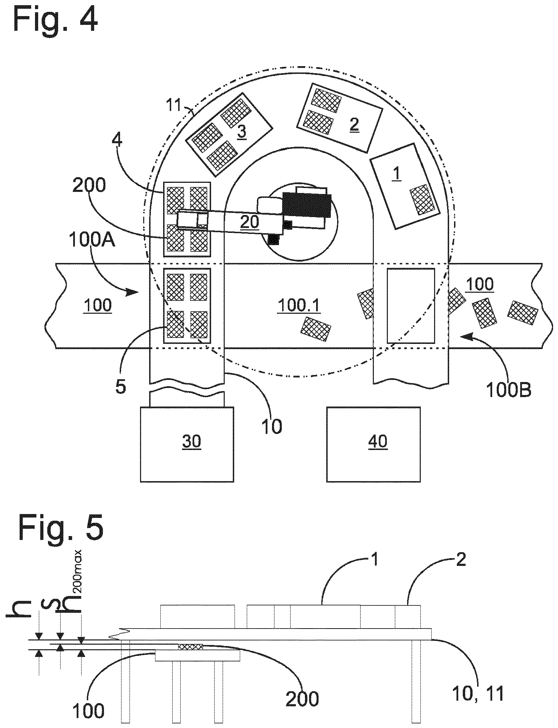

Fig. 4, 5 zeigen in Draufsicht von oben (Fig. 4) bzw. Seitansicht (Fig. 5; Seitansicht von links in Fig. 4) ein System bzw. Verfahren nach einer weiteren Ausführung der vorliegenden Erfindung. Einander entsprechende Merkmale sind durch identische Bezugszeichen identifiziert, so dass auf die vorstehende Beschreibung Bezug genommen und nachfolgend nur auf Unterschiede eingegangen wird.

Bei der Ausführung der Fig. 4, 5 überführt der Roboter 20 in Fig. 4, 5 schraffiert angedeuteten Güter 200 nicht zwischen den Transportträgern, sondern von den Transportträgern auf einen Ablageabschnitt 100.1 eines Abfördermittels 100.

Der Ablageabschnitt 100.1 und ein in Fig. 4 oberer Teilabschnitt des Karussellbahnabschnitts 11 sind auf gegenüberliegen Seiten des Roboters 20 angeordnet, Förderer 10 und Abfördermittel 100 umgreifen gemeinsam den Roboter 20 vollständig.

Wie in der Seitansicht der Fig. 5 erkennbar sowie gestrichelt in Fig. 4 angedeutet, übergreift der Förderer 10 das Abfördermittel 100 an zwei Stellen 100A, 100B.

Dabei ist der Abstand h zwischen einer Auflagefläche des Abfördermittels 100 und einer diese übergreifenden Unterseite des Förderers 10 an diesen Stellen 100A, 100B jeweils wenigstens gleich der Summe aus einer vorgegebenen Maximalhöhe h₂₀₀ₘₐₓ der zu überführenden Güter und einem vorgegebenen Sicherheitsabstand s.

Zur Überführung von Gütern 200 wird wie vorstehend beschrieben jeweils eine Gruppe mit wenigstens vier Transportträgern auf dem Karussellbahnabschnitt 11 angeordnet.

Dann gibt der Roboter 20, gegebenenfalls mehrfach wiederholt und/oder in unterschiedlicher Reihenfolge, jeweils wenigstens ein von einem der Transportträger aufgenommenes Gut 200 auf den Ablageabschnitt 100.1 des Abfördermittels 100 ab, in einer Ausführung während das Abfördermittels 100 (ab)fördert.

Anschließend wird, wie vorstehend beschrieben, jeweils eine weitere Gruppe mit wenigstens vier Transportträgern auf dem Karussellbahnabschnitt 11 angeordnet und der Roboter 20 gibt wieder, gegebenenfalls mehrfach wiederholt und/oder in unterschiedlicher Reihenfolge, jeweils wenigstens ein von einem dieser Transportträger aufgenommenes Gut 200 auf den Ablageabschnitt 100.1 des Abfördermittels 100 ab.

Obwohl in der vorhergehenden Beschreibung exemplarische Ausführungen erläutert wurden, sei darauf hingewiesen, dass eine Vielzahl von Abwandlungen möglich ist.

So können die Transportträger in einer Ausführung eine Unterteilung und/oder wenigstens zwei Behälter zur Separierung von Gütern aufweisen (nicht dargestellt).

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 1: erster Transportträger
- 2: zweiter Transportträger
- 3: dritter Transportträger
- 4: vierter Transportträger
- 5-8: Transportträger
- 10: Förderer
- 11: Karussellbahnabschnitt
- 12: Bypass-Bahnabschnitt
- 13, 14: Schnittstelle
- 20: Roboter
- 30: Versorgungseinrichtung
- 40: Steuerung
- 100: Abfördermittel
- 100.1: Ablageabschnitt
- 100A,100B: Stelle
- 200: Gut
- h: Abstand Abfördermittel- Auflagefläche Förderer-Unterseite
- h₂₀₀ₘₐₓ: maximale Güterhöhe
- L: Längsseite
- S: Stirnseite
- s: Sicherheitsabstand

## Patentansprüche

1. System zur Überführung von Gütern zwischen Transportträgern, mit einer Steuerung (40) des Systems und einem Förderer (10) zum gleichzeitigen Transportieren einer Mehrzahl von wenigstens vier Transportträgern (1-8) des Systems, der einen Karussellbahnabschnitt (11) zur Anordnung einer Gruppe mit wenigstens vier Transportträgern (1-4; 1-5) der Transportträgermehrzahl aufweist, welcher einen Roboter (20) zum Überführen von Gütern zwischen den Transportträgern derart, dass wenigstens 50% des Karussellbahnabschnitts in einem Zugriffsbereich des Roboters liegen, **dadurch gekennzeichnet, dass** der Karussellbahnabschnitt den Roboter um höchstens 240° umschlingt.

2. System nach Anspruch 1, **dadurch gekennzeichnet, dass** der Karussellbahnabschnitt (11) den Roboter (20) um wenigstens 120° umschlingt und/oder dass der Förderer einen Bypass-Bahnabschnitt (12) zur Anordnung von wenigstens einem, insbesondere von wenigstens zwei, Transportträgern der Transportträgermehrzahl, wobei wenigstens 50% des Bypass-Bahnabschnitts im Zugriffsbereich des Roboters liegen, und ein Schnittstellenpaar (13, 14) zur Beschicken des Bypass-Bahnabschnitts mit Transportträgern der Transportträgermehrzahl, insbesondere zur alternativen Beschicken des Bypass-Bahnabschnitts oder des Karussellbahnabschnitts mit angeförderten Transportträgern der Transportträgermehrzahl und/oder zur Beschicken des Bypass-Bahnabschnitts mit Transportträgern von dem Karussellbahnabschnitt, und zur Abfuhr von Transportträgern von dem Bypass-Bahnabschnitt, insbesondere auf den Karussellbahnabschnitt und/oder von diesem weg, aufweist.

3. System nach einem der vorhergehenden Ansprüche, **gekennzeichnet durch** eine Versorgungseinrichtung (30) zur Versorgung des Förderers mit Transportträgern der Transportträgermehrzahl.

4. System nach einem der vorhergehenden Ansprüche, **dadurch gekennzeichnet, dass** wenigstens einer der Transportträger der Transportträgermehrzahl eine Unterteilung und/oder wenigstens zwei Behälter zur Separierung von Gütern aufweist.

5. Verfahren zur Überführung von Gütern zwischen Transportträgern mittels eines Systems nach einem der vorhergehenden Ansprüche, wobei eine erste Gruppe mit wenigstens vier Transportträgern (1-4) der Transportträgermehrzahl auf dem Karussellbahnabschnitt (11) angeordnet wird (S10), wobei vier Transportträger der ersten Gruppe auf dem Karussellbahnabschnitt, insbesondere aufeinanderfolgend, in der Reihenfolge erster, zweiter, dritter, vierter Transportträger oder einer anderen Reihenfolge angeordnet werden;
wobei das Verfahren den, insbesondere wiederholten, Schritt:
- Abgeben (S20) von wenigstens einem von dem ersten Transportträger (1) aufgenommenen Gut an den zweiten Transportträger (2) mittels des Roboters (20);
sowie wenigstens einen der, insbesondere wiederholten, Schritte aufweist:
- Abgeben (S30) von wenigstens einem von dem ersten Transportträger (1) aufgenommenen Gut an den dritten Transportträger (3) mittels des Roboters;
- Abgeben (S30) von wenigstens einem von dem dritten Transportträger (3) aufgenommenen Gut an den zweiten Transportträger (2) mittels des Roboters; und/oder
- Abgeben (S30) von wenigstens einem von dem dritten Transportträger (3) aufgenommenen Gut an den vierten Transportträger (4) mittels des Roboters.

6. Verfahren nach dem vorhergehenden Anspruch, **gekennzeichnet durch** wenigstens einen der, insbesondere wiederholten, Schritte:
- Abgeben (S40) von wenigstens einem von dem ersten Transportträger (1) aufgenommenen Gut an den vierten Transportträger (4) mittels des Roboters;
- Abgeben (S40) von wenigstens einem von dem vierten Transportträger aufgenommenen Gut an den zweiten Transportträger mittels des Roboters;
- Abgeben (S50) von wenigstens einem von dem ersten, zweiten, dritten oder vierten Transportträger aufgenommenen Gut an einen auf dem Bypass-Bahnabschnitt angeordneten Transportträger mittels des Roboters; und/oder
- Abgeben (S50) von wenigstens einem von einem auf dem Bypass-Bahnabschnitt angeordneten Transportträger aufgenommenen Gut an einen anderen auf dem Bypass-Bahnabschnitt angeordneten Transportträger oder den ersten, zweiten, dritten oder vierten Transportträger mittels des Roboters.

7. Verfahren nach einem der vorhergehenden Ansprüche, wobei eine weitere Gruppe mit wenigstens vier Transportträgern der Transportträgermehrzahl anstelle der ersten Gruppe auf dem Karussellbahnabschnitt angeordnet wird (S10), wobei vier Transportträger dieser weiteren Gruppe auf dem Karussellbahnabschnitt, insbesondere aufeinanderfolgend, in der Reihenfolge erster, zweiter, dritter, vierter Transportträger oder einer anderen Reihenfolge angeordnet werden,
wobei das Verfahren den, insbesondere wiederholten, Schritt:
- Abgeben (S20) von wenigstens einem von dem ersten Transportträger dieser weiteren Gruppe aufgenommenen Gut an den zweiten Transportträger dieser weiteren Gruppe mittels des Roboters (20);
sowie wenigstens einen der, insbesondere wiederholten, Schritte aufweist:
- Abgeben (S30) von wenigstens einem von dem ersten Transportträger dieser weiteren Gruppe aufgenommenen Gut an den dritten Transportträger dieser weiteren Gruppe mittels des Roboters;
- Abgeben (S30) von wenigstens einem von dem dritten Transportträger dieser weiteren Gruppe aufgenommenen Gut an den zweiten Transportträger dieser weiteren Gruppe mittels des Roboters; und/oder
- Abgeben (S30) von wenigstens einem von dem dritten Transportträger dieser weiteren Gruppe aufgenommenen Gut an den vierten Transportträger dieser weiteren Gruppe mittels des Roboters.

8. Verfahren nach einem der vorhergehenden Ansprüche, wobei
der erste, zweite, dritte und vierte Transportträger der ersten Gruppe und der erste, zweite, dritte und vierte Transportträger der weiteren Gruppe in unterschiedlichen Reihenfolgen angeordnet sind; und/oder
wenigstens ein Transportträger der ersten Gruppe und wenigstens ein Transportträger der weiteren Gruppe derselbe Transportträger ist; und/oder
das Verfahren wenigstens einen der, insbesondere wiederholten, Schritte aufweist:
- Abgeben (S40) von wenigstens einem von dem ersten Transportträger der weiteren Gruppe aufgenommenen Gut an den vierten Transportträger der weiteren Gruppe mittels des Roboters;
- Abgeben (S40) von wenigstens einem von dem vierten Transportträger der weiteren Gruppe aufgenommenen Gut an den zweiten Transportträger der weiteren Gruppe mittels des Roboters;
- Abgeben (S50) von wenigstens einem von dem ersten, zweiten, dritten oder vierten Transportträger der weiteren Gruppe aufgenommenen Gut an einen auf dem Bypass-Bahnabschnitt angeordneten Transportträger mittels des Roboters; und/oder
- Abgeben (S50) von wenigstens einem von einem auf dem Bypass-Bahnabschnitt angeordneten Transportträger aufgenommenen Gut an einen anderen auf dem Bypass-Bahnabschnitt angeordneten Transportträger oder den ersten, zweiten, dritten oder vierten Transportträger der weiteren Gruppe mittels des Roboters.

9. Verfahren nach einem der vorhergehenden Ansprüche, **gekennzeichnet durch** wenigstens einen der Schritte:
- Abgeben (S50) von wenigstens einem, insbesondere von einem anderen auf dem Bypass-Bahnabschnitt angeordneten Transportträger aufgenommenen, Gut an einen auf dem Bypass-Bahnabschnitt angeordneten Transportträger, während die erste Gruppe auf dem Karussellbahnabschnitt angeordnet ist oder während die weitere Gruppe auf dem Karussellbahnabschnitt angeordnet ist oder während die weitere Gruppe anstelle der ersten Gruppe auf dem Karussellbahnabschnitt angeordnet wird; und/oder
- Anordnen und/oder Abfördern von wenigstens einem Transportträger auf dem bzw. von dem Bypass-Bahnabschnitt, während mittels des Roboters wenigstens ein Gut an einen auf dem Karussellbahnabschnitt angeordneten Transportträger abgegeben wird.

10. Verfahren nach einem der vorhergehenden Ansprüche, **dadurch gekennzeichnet, dass** eine Transportrichtung des Karussellbahnabschnitts und/oder Bypass-Bahnabschnitts ein- oder mehrfach umgekehrt wird und/oder der Roboter zwischen dem Aufnahmen und Abgeben von wenigstens einem Gut horizontal verschwenkt.

11. Verfahren nach einem der vorhergehenden Ansprüche, **dadurch gekennzeichnet, dass** eine Längsseite (L) wenigstens eines Transportträgers der ersten Gruppe und/oder der weiteren Gruppe in Transportrichtung stromaufwärts angeordnet ist und/oder die erste oder weitere Gruppe stillsteht, während mittels des Roboters wenigstens ein Gut von dieser Gruppe aufgenommen und/oder wenigstens ein Gut an diese Gruppe abgegeben wird.

12. Verfahren nach einem der vorhergehenden Ansprüche, **dadurch gekennzeichnet, dass** eine Stirnseite (S) wenigstens eines Transportträgers der ersten Gruppe und/oder der weiteren Gruppe in Transportrichtung stromaufwärts angeordnet ist und/oder dass die erste oder weitere Gruppe bewegt wird, während mittels des Roboters wenigstens ein Gut von dieser Gruppe aufgenommen und/oder wenigstens ein Gut an diese Gruppe abgegeben wird, und/oder dass mittels des Roboters wenigstens ein Gut auf den Ablageabschnitt des Abfördermittels abgegeben wird, während das Abfördermittel fördert.

13. Verfahren nach einem der vorhergehenden Ansprüche, **dadurch gekennzeichnet, dass** die Transportträger der ersten Gruppe und/oder der weiteren Gruppe auf Basis wenigstens eines Überführungsauftrags, insbesondere von der Versorgungseinrichtung (30) und/oder aufeinanderfolgend zu einem Verband, zusammengestellt werden.

14. Computerprogrammprodukt mit einem Programmcode, der auf einem von einem Computer lesbaren Medium gespeichert ist und ein System nach einem der Ansprüche 1-4 zur Durchführung eines Verfahrens nach einem der vorhergehenden Ansprüche 5-13 veranlasst.

## Claims

1. A system for transferring items between transport carriers, wherein the system comprises
a control unit (40) of the system and
a conveyor (10) for simultaneously transporting a plurality of at least four transport carriers (1-8) of the system, which conveyor (10) comprises a carousel track portion (11) for arranging a group of at least four transport carriers (1-4; 1-5) of the plurality of transport carriers, which carousel track portion (11) a robot (20) for transferring items between the transport carriers in such a way that at least 50% of the carousel track portion lies in a range of access of the robot, **characterised in that** the carousel track portion wraps around the robot by no more than 240°.

2. The system according to claim 1, **characterised in that** the carousel track portion (11) wraps around the robot (20) by at least 120° and / or **in that** the conveyor has a bypass track portion (12) for arranging at least one transport carrier, in particular at least two transport carriers, of the plurality of transport carriers, wherein at least 50% of the bypass track portion are located within the range of access of the robot, and a pair of interfaces (13, 14) for feeding the bypass track portion with transport carriers of the plurality of transport carriers, in particular for alternatively feeding the bypass track portion or the carousel track portion with transport carriers of the plurality of transport carriers that are being conveyed in order to be added, and / or for feeding the bypass track portion with transport carriers from the carousel track portion, and for removing transport carriers from the bypass track portion, in particular onto the carousel track portion and / or away from the carousel track portion.

3. The system according to any one of the preceding claims, **characterised by** a supply device (30) for supplying the conveyor with transport carriers of the plurality of transport carriers.

4. The system according to any one of the preceding claims, **characterised in that** at least one of the transport carriers of the plurality of transport carriers has a subdivision and / or at least two containers for the separation of items.

5. A method of transferring items between transport carriers by means of a system according to any one of the preceding claims, wherein a first group of at least four transport carriers (1-4) of the plurality of transport carriers is arranged (S10) on the carousel track portion (11), wherein four transport carriers of the first group are arranged on the carousel track portion, in particular successively, in the order of a first, second, third, fourth transport carrier, or in a different order
wherein the method comprises the following step, in particular the following, repeated step:
- transferring (S20) at least one item carried by the first transport carrier (1) to the second transport carrier (2) by means of the robot (20);
as well as at least one of the following steps, in particular at least one of the following, repeated steps:
- transferring (S30) at least one item carried by the first transport carrier (1) to the third transport carrier (3) by means of the robot;
- transferring (S30) at least one item carried by the third transport carrier (3) to the second transport carrier (2) by means of the robot; and / or
- transferring (S30) at least one item carried by the third transport carrier (3) to the fourth transport carrier (4) by means of the robot.

6. The method according to the preceding claim, **characterised by** at least one of the following steps, in particular at least one of the following, repeated steps:
- transferring (S40) at least one item carried by the first transport carrier (1) to the fourth transport carrier (4) by means of the robot;
- transferring (S40) at least one item carried by the fourth transport carrier to the second transport carrier by means of the robot;
- transferring (S50) at least one item carried by the first, second, third or fourth transport carrier to a transport carrier which is arranged on the bypass track portion by means of the robot; and / or
- transferring (S50) at least one item carried by a transport carrier which is arranged on the bypass track portion to another transport carrier which is arranged on the bypass track portion, or to the first, second, third or fourth transport carrier by means of the robot.

7. The method according to any one of the preceding claims, wherein a further group of at least four transport carriers of the plurality of transport carriers is arranged (S10) on the carousel track portion instead of the first group, wherein four transport carriers of this further group are arranged on the carousel track portion, in particular successively, in the order of a first, second, third, fourth transport carrier, or in a different order,
wherein the method comprises the following step, in particular the following, repeated step:
- transferring (S20) at least one item carried by the first transport carrier of this further group to the second transport carrier of this further group by means of the robot (20);
as well as at least one of the following steps, in particular at least one of the following, repeated steps:
- transferring (S30) at least one item carried by the first transport carrier of this further group to the third transport carrier of this further group by means of the robot;
- transferring (S30) at least one item carried by the third transport carrier of this further group to the second transport carrier of this further group by means of the robot; and / or
- transferring (S30) at least one item carried by the third transport carrier of this further group to the fourth transport carrier of this further group by means of the robot.

8. The method according to any one of the preceding claims, wherein
the first, second, third and fourth transport carriers of the first group and the first, second, third and fourth transport carriers of the further group are arranged in a different order; and / or
at least one transport carrier of the first group and at least one transport carrier of the further group is the same transport carrier; and / or
the method comprises at least one of the following steps, in particular at least one of the following, repeated steps:
- transferring (S40) at least one item carried by the first transport carrier of the further group to the fourth transport carrier of the further group by means of the robot;
- transferring (S40) at least one item carried by the fourth transport carrier of the further group to the second transport carrier of the further group by means of the robot;
- transferring (S50) at least one item carried by the first, second, third or fourth transport carrier of the further group to a transport carrier which is arranged on the bypass track portion by means of the robot; and / or
- transferring (S50) at least one item carried by a transport carrier which is arranged on the bypass track portion to another transport carrier which is arranged on the bypass track portion or to the first, second, third or fourth transport carrier of the further group by means of the robot.

9. The method according to any one of the preceding claims, **characterised by** at least one of the following steps:
- transferring (S50) at least one item, in particular at least one item which is carried by another transport carrier which is arranged on the bypass track portion, to a transport carrier which is arranged on the bypass track portion while the first group is arranged on the carousel track portion or while the further group is arranged on the carousel track portion or while the further group is being arranged on the carousel track portion instead of the first group; and / or
- arranging and / or removing at least one transport carrier respectively on or from the bypass track portion while at least one item is being transferred, by means of the robot, to a transport carrier which is arranged on the carousel track portion.

10. The method according to any one of the preceding claims, **characterised in that** a transport direction of the carousel track portion and / or of the bypass track portion is reversed once or several times and / or **in that** the robot is pivoted horizontally between picking up and releasing at least one item.

11. The method according to any one of the preceding claims, **characterised in that** a longitudinal side (L) of at least one transport carrier of the first group and / or of the further group is arranged upstream with respect to the transport direction and / or **in that** the first or the further group is stationary while at least one item is being picked up from this group by means of the robot and / or while at least one item is being transferred to this group by means of the robot.

12. The method according to any one of the preceding claims, **characterised in that** an end face (S) of at least one transport carrier of the first group and / or of the further group is arranged upstream with respect to the transport direction and / or **in that** the first or the further group is moved while at least one item is being picked up from this group by means of the robot and / or while at least one item is being transferred to this group by means of the robot, and / or **in that** at least one item is being transferred to the receiving portion of the removing means by means of the robot while the removing means is carrying out a conveying action.

13. The method according to any one of the preceding claims, **characterised in that**, on the basis of at least one transfer order, the transport carriers of the first group and / or of the further group are assembled, in particular by the supply device (30) and / or successively in order to form a composite assembly.

14. A computer program product comprising a program code which is stored on a computer readable medium and which causes a system according to any one of claims 1-4 to carry out a method according to any one of the preceding claims 5-13.

## Revendications

1. Système de transfert de marchandises entre des supports de transport, avec une commande (40) du système et
un convoyeur (10) pour le transport simultané d'une multitude d'au moins quatre supports de transport (1-8) du système, qui présente une section de piste de carrousel (11) pour l'agencement d'un groupe avec au moins quatre supports de transport (1-4 ; 1-5) de la multitude de supports de transport, qui enlace un robot (20) pour le transfert de marchandises entre les supports de transport de telle manière qu'au moins 50 % de la section de piste de carrousel se trouvent dans une zone d'accès du robot, **caractérisé en ce que** la section de piste de carrousel enlace le robot de 240° au maximum.

2. Système selon la revendication 1, **caractérisé en ce que** la
section de piste de carrousel (11) enlace le robot (20) d'au moins 120° et/ou que le convoyeur présente une section de piste de dérivation (12) destinée à agencer au moins un, en particulier au moins deux, supports de transport de la multitude de supports de transport, dans lequel au moins 50 % de la section de piste de dérivation se trouvent dans la zone d'accès du robot, et une paire d'interfaces (13, 14) destinée à charger la section de piste de dérivation en supports de transport de la multitude de supports de transport, en particulier pour le chargement alternatif de la section de piste de dérivation ou de la section de piste de carrousel en supports de transport convoyés de la multitude de supports de transport et/ou pour le chargement de la section de piste de dérivation en supports de transport depuis la section de piste de carrousel, et pour l'évacuation de supports de transport depuis la section de piste de dérivation, en particulier sur la section de piste de carrousel et/ou de manière à les éloigner de celle-ci.

3. Système selon l'une quelconque des revendications précédentes, **caractérisé par** un dispositif d'alimentation (30) destiné à alimenter le convoyeur en supports de transport de la multitude de supports de transport.

4. Système selon l'une quelconque des revendications précédentes, **caractérisé en ce qu'**au moins un des supports de transport de la multitude de supports de transport présente une subdivision et/ou au moins deux contenants pour la séparation de marchandises.

5. Procédé de transfert de marchandises entre des supports de transport au moyen d'un système selon l'une quelconque des revendications précédentes, dans lequel un premier groupe avec au moins quatre supports de transport (1-4) de la multitude de supports de transport est agencé (S10) sur la section de piste de carrousel (11), dans lequel quatre supports de transport du premier groupe sont agencés sur la section de piste de carrousel, en particulier de manière à se suivre les uns les autres, dans l'ordre du premier, du deuxième, du troisième, du quatrième support de transport ou dans un autre ordre ;
dans lequel le procédé présente l'étape, en particulier répétée :
- de distribution (S20) d'au moins une marchandise reçue par le premier support de transport (1) au deuxième support de transport (2) au moyen du robot (20) ;
et présente au moins une des étapes, en particulier répétées :
- de distribution (S30) d'au moins une marchandise reçue par le premier support de transport (1) au troisième support de transport (3) au moyen du robot ;
- de distribution (S30) d'au moins une marchandise reçue par le troisième support de transport (3) au deuxième support de transport (2) au moyen du robot ; et/ou
- de distribution (S30) d'au moins une marchandise reçue par le troisième support de transport (3) au quatrième support de transport (4) au moyen du robot.

6. Procédé selon la revendication précédente, **caractérisé par** au moins une des étapes, en particulier répétées :
- de distribution (S40) d'au moins une marchandise reçue par le premier support de transport (1) au quatrième support de transport (4) à l'aide du robot ;
- de distribution (S40) d'au moins une marchandise reçue par le quatrième support de transport au deuxième support de transport au moyen du robot ;
- de distribution (S50) d'au moins une marchandise reçue par le premier, le deuxième, le troisième ou le quatrième support de transport à un support de transport agencé sur la section de piste de dérivation au moyen du robot ; et/ou
- de distribution (S50) d'au moins une marchandise reçue par un support de transport agencé sur la section de piste de dérivation à un autre support de transport agencé sur la section de piste de dérivation ou au premier, deuxième, troisième ou quatrième support de transport au moyen du robot.

7. Procédé selon l'une quelconque des revendications précédentes, dans lequel un groupe supplémentaire avec au moins quatre supports de transport de la multitude de supports de transport est agencé sur la section de piste de carrousel à la place du premier groupe (S10), dans lequel quatre supports de transport dudit groupe supplémentaire sont agencés sur la section de piste de carrousel, en particulier de manière à se suivre les uns les autres, dans l'ordre du premier, du deuxième, du troisième, du quatrième support de transport ou dans un autre ordre, dans lequel le procédé présente l'étape, en particulier répétée :
- de distribution (S20) d'au moins une marchandise reçue par le premier support de transport dudit groupe supplémentaire au deuxième support de transport dudit groupe supplémentaire au moyen du robot (20) ;
et présente au moins une des étapes, en particulier répétées :
- de distribution (S30) d'au moins une marchandise reçue par le premier support de transport dudit groupe supplémentaire au troisième support de transport dudit groupe supplémentaire au moyen du robot ;
- de distribution (S30) d'au moins une marchandise reçue par le troisième support de transport dudit groupe supplémentaire au deuxième support de transport dudit groupe supplémentaire au moyen du robot ; et/ou
- de distribution (S30) d'au moins une marchandise reçue par le troisième support de transport dudit groupe supplémentaire au quatrième support de transport dudit groupe supplémentaire au moyen du robot.

8. Procédé selon l'une quelconque des revendications précédentes, dans lequel
les premier, deuxième, troisième et quatrième supports de transport du premier groupe et les premier, deuxième, troisième et quatrième supports de transport du groupe supplémentaire sont agencés dans des ordres différents ; et/ou
au moins un support de transport du premier groupe et au moins un support de transport du groupe supplémentaire sont le même support de transport ; et/ou le procédé présente au moins une des étapes, en particulier répétées :
- de distribution (S40) d'au moins une marchandise reçue par le premier support de transport du groupe supplémentaire au quatrième support de transport du groupe supplémentaire au moyen du robot ;
- de distribution (S40) d'au moins une marchandise reçue par le quatrième support de transport du groupe supplémentaire au deuxième support de transport du groupe supplémentaire au moyen du robot ;
- de distribution (S50) d'au moins une marchandise reçue par le premier, le deuxième, le troisième ou le quatrième support de transport du groupe supplémentaire à un support de transport agencé sur la section de piste de dérivation au moyen du robot ; et/ou
- de distribution (S50) d'au moins une marchandise reçue par un support de transport agencé sur la section de piste de dérivation à un autre support de transport agencé sur la section de piste de dérivation ou au premier, deuxième, troisième ou quatrième support de transport du groupe supplémentaire au moyen du robot.

9. Procédé selon l'une quelconque des revendications précédentes, **caractérisé par** au moins une des étapes :
- de distribution (S50) d'au moins une marchandise reçue en particulier par un autre support de transport agencé sur la section de piste de dérivation, à un support de transport agencé sur la section de piste de dérivation, tandis que le premier groupe est agencé sur la section de piste de carrousel ou tandis que le groupe supplémentaire est agencé sur la section de piste de carrousel ou tandis que le groupe supplémentaire est agencé sur la section de piste de carrousel à la place du premier groupe ; et/ou
- d'agencement/ou d'évacuation d'au moins un support de transport sur ou de la section de piste de by-pass, tandis qu'au moins une marchandise est distribuée au moyen du robot à un support de transport agencé sur la section de piste de carrousel.

10. Procédé selon l'une quelconque des revendications précédentes, **caractérisé en ce qu'**un sens de transport de la section de piste de carrousel et/ou de la section de piste de dérivation est inversé une ou plusieurs fois et/ou le robot pivote horizontalement entre la réception et la distribution d'au moins une marchandise.

11. Procédé selon l'une quelconque des revendications précédentes, **caractérisé en ce qu'**un côté longitudinal (L) d'au moins un support de transport du premier groupe et/ou du groupe supplémentaire est agencé en amont dans le sens de transport et/ou le premier groupe ou le groupe supplémentaire est à l'arrêt, tandis qu'au moins une marchandise est reçue par ledit groupe et/ou au moins une marchandise est distribuée audit groupe au moyen du robot.

12. Procédé selon l'une quelconque des revendications précédentes, **caractérisé en ce qu'**un côté frontal (S) d'au moins un support de transport du premier groupe et/ou du groupe supplémentaire est agencé en amont dans le sens de transport, et/ou que le premier groupe ou le groupe supplémentaire est déplacé, tandis qu'au moins une marchandise est reçue par ledit groupe et/ou au moins une marchandise est distribuée audit groupe au moyen du robot, et/ou qu'au moins une marchandise est distribuée au moyen du robot sur la section de dépôt du moyen d'évacuation, tandis que le moyen d'évacuation effectue un convoyage.

13. Procédé selon l'une quelconque des revendications précédentes, **caractérisé en ce que** les supports de transport du premier groupe et/ou du groupe supplémentaire sont assemblés en un ensemble sur la base d'au moins un ordre de transfert, en particulier par le système d'alimentation (30) et/ou les uns après les autres.

14. Produit de programme d'ordinateur avec un code de programme, qui est stocké sur un support lisible par ordinateur et qui amène un système selon l'une quelconque des revendications 1-4 à mettre en œuvre un procédé selon l'une quelconque des revendications 5-13.
